(19) Europäisches Patentamt
European Patent Office
Office européen des brevets

(11) **EP 4 579 815 A1**

(12) **EUROPEAN PATENT APPLICATION**
published in accordance with Art. 153(4) EPC

(43) Date of publication:
**02.07.2025 Bulletin 2025/27**

(21) Application number: **22960228.9**

(22) Date of filing: **30.09.2022**

(51) International Patent Classification (IPC):
*H01M 4/583* (2010.01)

(52) Cooperative Patent Classification (CPC):
**H01M 4/583;** Y02E 60/10

(86) International application number:
**PCT/CN2022/123062**

(87) International publication number:
**WO 2024/065600 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **CHEN, Yusheng
Ningde, Fujian 352100 (CN)**
• **CAI, Yuxin
Ningde, Fujian 352100 (CN)**
• **DONG, Jiali
Ningde, Fujian 352100 (CN)**

(74) Representative: **Icosa
83 avenue Denfert-Rochereau
75014 Paris (FR)**

(54) **NEGATIVE ELECTRODE MATERIAL, SECONDARY BATTERY AND ELECTRONIC DEVICE**

(57) A negative electrode material is provided, containing a carbon-based material, where an average surface roughness of the negative electrode material is $R_a$, and $1.2\,nm \leq R_a \leq 30\,nm$. The negative electrode material of this application possesses a relatively high gravimetric capacity and excellent kinetic properties, so that a secondary battery containing the negative electrode material achieves both a high energy density and high fast-charge performance. A secondary battery containing the negative electrode material is also provided.

FIG. 1

EP 4 579 815 A1

**Description**

**TECHNICAL FIELD**

This application relates to the field of energy storage, and in particular, to a negative electrode material, a secondary battery, and an electronic device.

**BACKGROUND**

With the continuous update and iteration of consumer electronics products, the requirements imposed by the products on the performance of lithium-ion batteries are increasingly higher. Among the performance metrics of a lithium-ion battery, the energy density and the fast-charge capability are key to product experience. As a main negative electrode material for use in a lithium-ion battery, artificial graphite can improve the energy density and fast-charge performance of the lithium-ion battery by enhancing the gravimetric capacity and kinetic performance of the material.

Conventional artificial graphite typically increases the gravimetric capacity by improving the graphitization degree of a precursor. However, the increase in the gravimetric capacity in this way is limited. Moreover, in this way, a very regular crystal structure is exhibited inside the graphite and on the surface of the graphite, thereby being unfavorable to rapid diffusion of lithium ions, increasing the difficulty of lithium-ion diffusion, and in turn, deteriorating the kinetic performance. Therefore, it is of great significance to develop a new technique to greatly increase the gravimetric capacity and kinetic performance of graphite.

**SUMMARY**

In view of the above problems in the prior art, this application provides a negative electrode material and a secondary battery containing the negative electrode material. The negative electrode material of this application possesses a relatively high gravimetric capacity and excellent kinetic properties, so that a secondary battery containing the negative electrode material achieves both a high energy density and high fast-charge performance.

According to a first aspect, this application provides a negative electrode material. The negative electrode material contains a carbon-based material. An average surface roughness of the negative electrode material is $R_a$, and 1.2 nm $\leq R_a \leq$ 30 nm. The surface carbon atoms of the negative electrode material are depleted by reactions to varying degrees, resulting in a corresponding wrinkled structure on the surface of the material, and in turn, manifesting some degree of roughness on the surface of the negative electrode material. The wrinkled structure on the surface of the negative electrode material of this application can provide a large number of adsorption sites for lithium ions, thereby increasing the gravimetric capacity of the negative electrode material. In addition, the wrinkled structure on the surface can also promote the diffusion of lithium ions in a base plane of the negative electrode material, thereby improving the kinetic properties of the negative electrode material. In addition, the negative electrode material of this application can expose more end faces, thereby facilitating rapid intercalation of lithium ions, and in turn, further improving the kinetic properties of the material. With $R_a$ falling within the above range, the negative electrode material possesses an appropriate wrinkled structure, thereby effectively enhancing the gravimetric capacity and kinetic properties. In this way, the secondary battery achieves both a high energy density and high fast-charge performance without compromising electrical performance such as the first-cycle Coulombic efficiency, storage performance, or cycle performance. In some embodiments, 5 nm $\leq R_a \leq$ 25 nm.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: 2 $\leq C_{004}/C_{110} \leq$ 7. The $C_{004}$ crystal plane of the negative electrode material is parallel to the base plane direction. The $C_{110}$ crystal plane is perpendicular to the base plane direction. The $C_{004}/C_{110}$ ratio represents the orientation index of the crystal plane of the negative electrode material. A higher $C_{004}/C_{110}$ ratio leads to a higher percentage of the crystal plane parallel to the base plane in the negative electrode material, and is more unfavorable to intercalation of lithium ions, and results in larger expansion in the cycling process. An unduly low $C_{004}/C_{110}$ ratio results in a relatively high risk of deformation of the electrode plate during cycling. When the $C_{004}/C_{110}$ ratio falls within the above range, the crystal plane orientation index of the negative electrode material is appropriate, and the secondary battery can exhibit good kinetics without significantly reducing the energy density. In some embodiments, 2 $\leq C_{004}/C_{110} \leq$ 5.

In some embodiments, as tested by X-ray diffractometry, an average stacking thickness of the negative electrode material along a c-axis direction is $L_c$, and 20 nm $\leq L_c \leq$ 35 nm. In some embodiments, as tested by the X-ray diffractometry, an average stacking thickness of the negative electrode material along an a-axis direction is $L_a$, and 95 nm $\leq L_a \leq$ 150 nm. The values of $L_c$ and $L_a$ represent the graphitization degree of the negative electrode material. The lower the values of $L_c$ and $L_a$, the lower the gravimetric capacity of the negative electrode material. When the values of $L_c$ and $L_a$ are unduly high, the gravimetric capacity of the negative electrode material is increased, but the cycle performance of the material will decline. The values of $L_c$ and $L_a$ fall within the above ranges, so that the negative electrode material achieves a high gravimetric capacity without significantly reducing the cycle performance. In some embodiments, 23 nm $\leq L_c \leq$ 32 nm. In some embodiments, 98 nm $\leq L_a \leq$ 145 nm.

In some embodiments, as tested by X-ray diffractometry, a full-width-at-half-maximum of a 002 crystal plane diffraction peak of the negative electrode material is Fw, and 0.28° $\leq$ Fw $\leq$ 0.35°; The lower the value of Fw, the larger the crystal grain size of the negative electrode material, and the higher the gravimetric capacity, but the severer the cycle expansion. The higher the value of Fw, the smaller the crystal grain size of the negative electrode material, and the lower the gravimetric capacity of the material. The value of Fw falls within the above range, so that the negative electrode material achieves a high gravimetric capacity without significantly reducing the cycle performance. In some embodiments, 0.28° $\leq$ Fw $\leq$ 0.32°.

In some embodiments, $D_{v50}$ of the negative electrode material satisfies: 6 nm $\leq D_{v50} \leq$ 15 nm. In some embodiments, $D_{v99}$ of the negative electrode material satisfies: 15 nm $\leq D_{v99} \leq$ 42 nm. The particle sizes $D_{v50}$ and $D_{v99}$ of the negative electrode material affect the surface roughness of the material. The smaller the particles, the larger the reaction contact area of the negative electrode material, the deeper the reaction of carbon atoms, the higher the surface roughness, but the lower the first-cycle Coulombic efficiency and the cycle capacity retention rate of the negative electrode material. The larger the particles, the more difficult it is for the negative electrode material to react during processing, and the lower the surface roughness. This achieves no significant improvement effect on the gravimetric capacity and kinetics of the material. In addition, unduly large particles make the slurry of the material less processable. The $D_{v50}$ and $D_{v99}$ of the negative electrode material fall within the above ranges. Therefore, the secondary battery containing the negative electrode material achieves a high energy density and high fast-charge performance without impairing the electrical performance such as first-cycle Coulombic efficiency, storage performance, and cycle performance of the battery. In some embodiments, 8 nm $\leq D_{v50} \leq$ 13 nm. In some embodiments, 20 nm $\leq D_{v99} \leq$ 35 nm.

In some embodiments, a tap density (TD) of the negative electrode material is greater than or equal to 0.80 g/cm$^3$. If the tap density is unduly low, the slurry of the negative electrode material is less dispersive during preparation of the secondary battery, and the slurry is prone to settle down, thereby resulting in an uneven thickness of the coating, and in turn, impairing the electrical performance of the secondary battery. In some embodiments, the tap density of the negative electrode material is 0.80 g/cm$^3$ to 1.5 g/cm$^3$.

In some embodiments, the carbon-based material includes artificial graphite and/or natural graphite.

In some embodiments, a method for preparing the negative electrode material includes: heating and reacting a pretreated graphite material with $(NH_4)_2S_2O_8$ under a liquid-phase condition, where a mass percentage of the added $(NH_4)_2S_2O_8$ is 1% to 6%.

In some embodiments, a reaction duration of heating the carbonaceous material together with $(NH_4)_2S_2O_8$ is 6 to 12 hours.

In some embodiments, a reaction temperature of heating the carbonaceous material together with $(NH_4)_2S_2O_8$ is 80 °C to 150 °C.

According to a second aspect, this application provides a secondary battery. The secondary battery includes a negative electrode. The negative electrode includes a negative active material layer. The negative active material layer includes a negative active material. The negative active material includes the negative electrode material according to the first aspect.

In some embodiments, based on a mass of the negative active material, a mass percentage of the negative electrode material is w, and 70% $\leq$ w $\leq$ 100%. In some embodiments, 80% $\leq$ w $\leq$ 100%. The value of $R_a$ of the negative electrode material falls within the range of 1.2 nm to 30 nm, thereby significantly enhancing the gravimetric capacity and kinetic properties. Therefore, the percentage of the negative electrode material in the negative active material is set to be higher than 70% to effectively improve the energy density and fast-charge performance of the secondary battery.

In some embodiments, an expansion rate of the negative electrode is less than or equal to 30%. The processed negative electrode material exposes more crystal planes, so that the particles in the negative electrode plate expand in a plurality of directions. The value of $R_a$ of the negative electrode material falls within the range of 1.2 nm to 30 nm, thereby alleviating the expansion rate of the electrode plate to some extent.

In some embodiments, a compacted density of the negative electrode is greater than or equal to 1.48 g/cm$^3$. In some embodiments, a film resistivity of the negative electrode is less than or equal to 0.50 $\Omega$/cm.

According to a third aspect, this application provides an electronic device. The electronic device includes the secondary battery according to the second aspect.

## BRIEF DESCRIPTION OF DRAWINGS

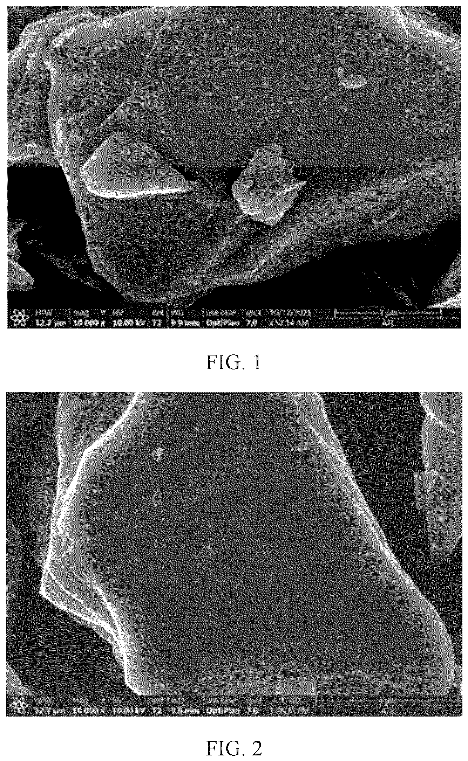

FIG. 1 is a scanning electron microscope (SEM) image of a negative electrode material according to Embodiment 21 of this application;

FIG. 2 is a SEM image of a negative electrode material according to Comparative Embodiment 1 of this application;

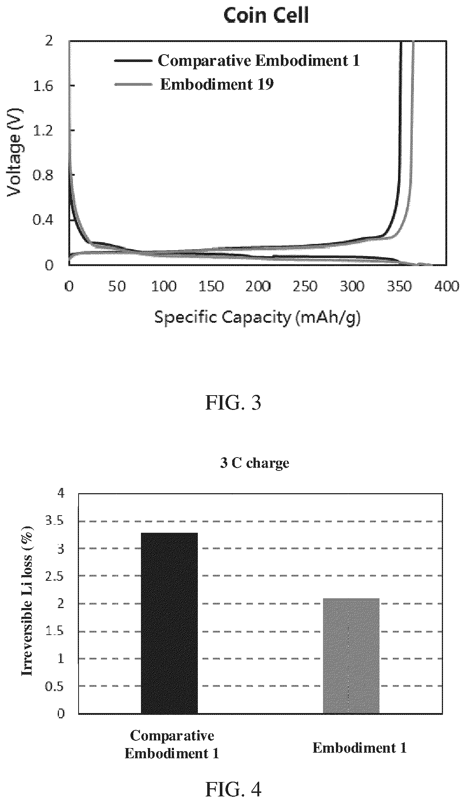

FIG. 3 shows a charge-discharge curve of a lithium-ion battery according to Embodiment 19 and Comparative Embodiment 1 of this application;

FIG. 4 shows an irreversible lithium loss of a lithium-ion battery according to Embodiment 1 and Comparative Embodiment 1 of this application; and

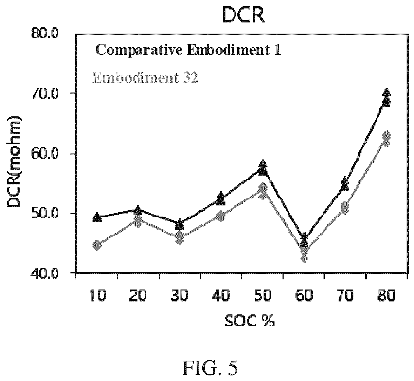

FIG. 5 shows a DCR curve of a lithium-ion battery according to Embodiment 32 and Comparative Embodiment 1 of this application.

## DETAILED DESCRIPTION

For brevity, some specific value ranges are disclosed herein. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The following describes this application in more detail with reference to specific embodiments. Understandably, the specific embodiments are merely intended to illustrate this application but not intended to limit the scope of this application.

### I. Negative electrode material

A negative electrode material according to this application contains a carbon-based material. An average surface roughness of the negative electrode material is $R_a$, and $1.2 \text{ nm} \leq R_a \leq 30 \text{ nm}$. The surface carbon atoms of the negative electrode material are depleted by reactions to varying degrees, resulting in a corresponding wrinkled structure on the surface of the material, and in turn, manifesting some degree of roughness on the surface of the negative electrode material. The wrinkled structure on the surface of the negative electrode material of this application can provide a large number of adsorption sites for lithium ions, thereby increasing the gravimetric capacity of the negative electrode material. In addition, the wrinkled structure on the surface can also promote the diffusion of lithium ions in a base plane of the negative electrode material, thereby improving the kinetic properties of the negative electrode material. In addition, the negative electrode material of this application can expose more end faces, thereby facilitating rapid intercalation of lithium ions, and in turn, further improving the kinetic properties of the material. With $R_a$ falling within the above range, the negative electrode material possesses an appropriate wrinkled structure, thereby effectively enhancing the gravimetric capacity and kinetic properties. In this way, the secondary battery achieves both a high energy density and high fast-charge performance without compromising electrical performance such as the first-cycle Coulombic efficiency, storage performance, or cycle performance. In some embodiments, $R_a$ is 1.5 nm, 2 nm, 3 nm, 4 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 21 nm, 22 nm, 23 nm, 24 nm, 25 nm, 26 nm, 27 nm, 28 nm, 29 nm, or a value falling within a range formed by any two thereof. In some embodiments, $5 \text{ nm} \leq R_a \leq 25 \text{ nm}$.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: $2 \leq C_{004}/C_{110} \leq 7$. The $C_{004}$ crystal plane of the negative electrode material is parallel to the base plane direction. The $C_{110}$ crystal plane is perpendicular to the base plane direction. The $C_{004}/C_{110}$ ratio represents the orientation index of the crystal plane of the negative electrode material. A higher $C_{004}/C_{110}$ ratio leads to a higher percentage of the crystal plane parallel to the base plane in the negative electrode material, and is more unfavorable to intercalation of lithium ions, and results in larger expansion in the cycling process. An unduly low $C_{004}/C_{110}$ ratio results in a relatively high risk of deformation of the electrode plate during cycling. When the $C_{004}/C_{110}$ ratio falls within the above range, the crystal plane orientation index of the negative electrode material is appropriate, and the secondary battery can exhibit good kinetics without significantly reducing the energy density. In some embodiments, the $C_{004}/C_{110}$ ratio is 2.5, 3, 3.5, 4, 4.5, 5, 5.5, 6, 6.5, or a value falling within a range formed by any two thereof. In some embodiments, $2 \le C_{004}/C_{110} \le 5$.

In some embodiments, as tested by X-ray diffractometry, an average stacking thickness of the negative electrode material along a c-axis direction is $L_c$, and $20 \text{ nm} \le L_c \le 35 \text{ nm}$. In some embodiments, $L_c$ is 21 nm, 22 nm, 23 nm, 24 nm, 25 nm, 26 nm, 27 nm, 28 nm, 29 nm, 30 nm, 31 nm, 32 nm, 33 nm, 34 nm, or a value falling within a range formed by any two thereof. In some embodiments, as tested by the X-ray diffractometry, an average stacking thickness of the negative electrode material along an a-axis direction is $L_a$, and $95 \text{ nm} \le L_a \le 150 \text{ nm}$. In some embodiments, $L_a$ is 100 nm, 103 nm, 105 nm, 107 nm, 110 nm, 113 nm, 115 nm, 117 nm, 120 nm, 123 nm, 125 nm, 127 nm, 130 nm, 143 nm, 145 nm, 147 nm, or a value falling within a range formed by any two thereof. The values of $L_c$ and $L_a$ represent the graphitization degree of the negative electrode material. The lower the values of $L_c$ and $L_a$, the lower the gravimetric capacity of the negative electrode material. When the values of $L_c$ and $L_a$ are unduly high, the gravimetric capacity of the negative electrode material is increased, but the cycle performance of the material will decline. The values of $L_c$ and $L_a$ fall within the above ranges, so that the negative electrode material achieves a high gravimetric capacity without significantly reducing the cycle performance. In some embodiments, $23 \text{ nm} \le L_c \le 32 \text{ nm}$. In some embodiments, $98 \text{ nm} \le L_a \le 145 \text{ nm}$.

In some embodiments, as tested by X-ray diffractometry, a full-width-at-half-maximum of a 002 crystal plane diffraction peak of the negative electrode material is Fw, and $0.28° \le Fw \le 0.35°$; In some embodiments, Fw is 0.285°, 0.29°, 0.295°, 0.3°, 0.305°, 0.31°, 0.315°, 0.325°, 0.33°, 0.335°, 0.34°, 0.345°, or a value falling within a range formed by any two thereof. The lower the value of Fw, the larger the crystal grain size of the negative electrode material, and the higher the gravimetric capacity, but the severer the cycle expansion. The higher the value of Fw, the smaller the crystal grain size of the negative electrode material, and the lower the gravimetric capacity of the material. The value of Fw falls within the above range, so that the negative electrode material achieves a high gravimetric capacity without significantly reducing the cycle performance. In some embodiments, $0.28° \le Fw \le 0.32°$.

In some embodiments, $D_{v50}$ of the negative electrode material satisfies: $6 \text{ nm} \le D_{v50} \le 15 \text{ nm}$. In some embodiments, $D_{v50}$ is 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, or a value falling within a range formed by any two thereof. $D_{v99}$ of the negative electrode material satisfies: $15 \text{ nm} \le D_{v99} \le 42 \text{ nm}$. In some embodiments, $D_{v99}$ is 20 nm, 22 nm, 24 nm, 26 nm, 28 nm, 30 nm, 32 nm, 34 nm, 36 nm, 38 nm, 40 nm, or a value falling within a range formed by any two thereof. The particle sizes $D_{v50}$ and $D_{v99}$ of the negative electrode material affect the surface roughness of the material. The smaller the particles, the larger the reaction contact area of the negative electrode material, the deeper the reaction of carbon atoms, the higher the surface roughness, but the lower the first-cycle Coulombic efficiency and the cycle capacity retention rate of the negative electrode material. The larger the particles, the more difficult it is for the negative electrode material to react during processing, and the lower the surface roughness. This achieves no significant improvement effect on the gravimetric capacity and kinetics of the material. In addition, unduly large particles make the slurry of the material less processable. The $D_{v50}$ and $D_{v99}$ of the negative electrode material fall within the above ranges. Therefore, the secondary battery containing the negative electrode material achieves a high energy density and high fast-charge performance without impairing the electrical performance such as first-cycle Coulombic efficiency, storage performance, and cycle performance of the battery. In some embodiments, $8 \text{ nm} \le D_{v50} \le 13 \text{ nm}$. In some embodiments, $20 \text{ nm} \le D_{v99} \le 35 \text{ nm}$. In this application, $D_{v50}$ is a particle diameter value at which 50% of the particles of the negative electrode material are smaller than this value in a volume-based particle size distribution. $D_{v99}$ is a particle diameter value at which 99% of the particles of the negative electrode material are smaller than this value in a volume-based particle size distribution.

In some embodiments, a tap density of the negative electrode material is greater than or equal to $0.80 \text{ g/cm}^3$. If the tap density is unduly low, the slurry of the negative electrode material is less dispersive during preparation of the secondary battery, and the slurry is prone to settle down, thereby resulting in an uneven thickness of the coating, and in turn, impairing the electrical performance of the secondary battery. In some embodiments, the tap density of the negative electrode material is $0.90 \text{ g/cm}^3$, $1.0 \text{ g/cm}^3$, $1.1 \text{ g/cm}^3$, $1.2 \text{ g/cm}^3$, $1.3 \text{ g/cm}^3$, $1.4 \text{ g/cm}^3$, or a value falling within a range formed by any two thereof.

In some embodiments, the carbon-based material includes a graphite material. The graphite material includes artificial graphite and/or natural graphite.

In some embodiments, a method for preparing the negative electrode material includes: heating and reacting a surface-pretreated graphite material with $(NH_4)_2S_2O_8$ under a liquid-phase condition, where a mass percentage of the added $(NH_4)_2S_2O_8$ is 1% to 6%. In some embodiments, the mass percentage of the $(NH_4)_2S_2O_8$ is 1%, 1.5%, 2%, 2.5%, 3%, 3.5%, 4%, 4.5%, 5%, 5.5%, 6%, or a value falling within a range formed by any two thereof. In this application, the mass percentage of the $(NH_4)_2S_2O_8$ is a percentage of the mass of the $(NH_4)_2S_2O_8$ in the mass of the pretreated graphite material. In some embodiments, the liquid-phase condition may be provided by water, an alcohol solution, or an organic solvent.

In some embodiments, a reaction duration of heating the surface-pretreated graphite material together with $(NH_4)_2S_2O_8$ is 6 h to 12 h. In some embodiments, the reaction duration of the heating reaction is 6 h, 6.5 h, 7 h, 7.5 h, 8 h, 8.5 h, 9 h, 9.5 h, 10 h, 10.5 h, 11 h, 11.5 h, 12 h, or a value falling within a range formed by any two thereof.

In some embodiments, a reaction temperature of heating the surface-pretreated graphite material together with $(NH_4)_2S_2O_8$ is 80 °C to 150 °C. In some embodiments, the reaction temperature of the heating reaction is 80 °C, 90 °C, 100 °C, 110 °C, 120 °C, 130 °C, 140 °C, 150 °C, or a value falling within a range formed by any two thereof.

In some embodiments, a method of the surface pretreatment is: performing surface coating on the graphite material, and then carbonizing the material in an inert atmosphere of 900 °C to 1200 °C (for example, 1000 °C) for a duration such as 4 h, and then performing a surface etching reaction. A coating agent used in the surface coating is at least one of pitch, tar, or a resinous organic material. The mass ratio between the coating agent and the graphite material is (1 to 5): (99 to 95). Method for the etching reaction include one of a high-temperature gas-phase reaction, a liquid-phase heating reaction, or a high-temperature solid-phase reaction. Gas sources used in the high-temperature gas-phase reaction include one of an oxygen-containing atmosphere, carbon dioxide, nitrogen dioxide, or methane. Reactants used in the liquid-phase heating reaction include one of $H_2O_2$, concentrated sulfuric acid, or nitric acid. Reactants used in the high-temperature solid-phase reaction include one of potassium permanganate, ammonium bicarbonate, or sodium bicarbonate.

## II. Secondary battery

This application provides a secondary battery. The secondary battery includes a negative electrode. The negative electrode includes a negative active material layer. The negative active material layer includes a negative active material. The negative active material includes the negative electrode material according to the first aspect.

In some embodiments, based on a mass of the negative active material, a mass percentage of the negative electrode material is w, and 70% ≤ w ≤ 100%. In some embodiments, w is 70%, 75%, 80%, 85%, 90%, 95%, or a value falling within a range formed by any two thereof. In some embodiments, 80% ≤ w ≤ 100%. The value of $R_a$ of the negative electrode material falls within the range of 1.2 nm to 30 nm, thereby significantly enhancing the gravimetric capacity and kinetic properties. Therefore, the percentage of the negative electrode material in the negative active material is set to be higher than 70% to effectively improve the energy density and fast-charge performance of the secondary battery.

In some embodiments, an expansion rate of the negative electrode is less than or equal to 30%. In this application, the expansion rate of the negative electrode is equal to $100\% \times (T_2-T_1)/T_1$, where $T_1$ is a thickness of the negative electrode when the secondary battery is in a 0% state of charge (SOC), and $T_2$ is a thickness of the negative electrode when the secondary battery is in a 100% SOC. The processed negative electrode material exposes more crystal planes, so that the particles in the negative electrode plate expand in a plurality of directions. The value of $R_a$ of the negative electrode material falls within the range of 1.2 nm to 30 nm, thereby alleviating the expansion rate of the electrode plate to some extent.

In some embodiments, a compacted density of the negative electrode is greater than or equal to 1.48 g/cm³. In this application, the compacted density of the negative electrode is a compacted density of the negative electrode when the secondary battery is in a 50% SOC. In some embodiments, a film resistivity of the negative electrode is less than or equal to 0.50 Ω/cm.

In some embodiments, the negative electrode further includes a negative current collector. The negative current collector includes: copper foil, aluminum foil, nickel foil, stainless steel foil, titanium foil, foamed nickel, foamed copper, a conductive-metal-clad polymer substrate, or any combination thereof.

In some embodiments, the negative active material layer further includes a binder and a conductive agent. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

In some embodiments, the conductive agent includes, but is not limited to, a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fibers, copper, nickel, aluminum, or silver. In some embodiments, the conductive polymer is a polyphenylene derivative.

The secondary battery according to this application further includes a positive electrode. The positive electrode includes a positive current collector and a positive active material layer. The positive active material layer includes a positive active material, a binder, and a conductive agent.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

According to some embodiments of this application, the positive active material includes at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder includes a binder polymer, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binders include at least one of polyethylene, polypropylene, polyvinyl ester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof.

The secondary battery according to this application further includes a separator. The material and the shape of the separator used in the secondary battery according to this application are not particularly limited, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The secondary battery according to this application further includes an electrolyte solution. The electrolyte solution applicable to this application may be an electrolyte solution known in the prior art.

According to some embodiments of this application, the electrolyte solution includes an organic solvent, a lithium salt, and optionally an additive. The organic solvent in the electrolyte solution of this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate)borate $LiB(C_2O_4)_2$ (LiBOB), or lithium difluoro(oxalate)borate $LiBF_2(C_2O_4)$ (LiDFOB). In some embodiments, the additive includes at least one of fluoroethylene carbonate or adiponitrile.

According to some embodiments of this application, the secondary battery according to this application includes, but is not limited to: a lithium-ion battery or a sodium-ion battery. In some embodiments, the secondary battery is a lithium-ion battery.

### III. Electronic device

This application further provides an electronic device. The electronic device includes the secondary battery according to the second aspect of this application.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Unless otherwise expressly specified, reagents, materials, and instruments used in the following embodiments and comparative embodiments are all commercially available.

## Embodiments and Comparative Embodiments

## Embodiment 1

### 1. Preparing a graphite material

The graphite material used herein includes artificial graphite and/or natural graphite. The artificial graphite is prepared by graphitizing a carbonaceous feedstock at a high temperature, where the carbonaceous feedback is needle coke, petroleum coke, pitch coke, biomass, or the like. The natural graphite is prepared by spheroidizing natural flake graphite.

### 2. Surface pretreatment of the graphite material

Weighing out a specified mass of the graphite material, and performing surface pretreatment according to the following method: Performing surface coating on the graphite material, and carbonizing the pretreated graphite material for 4 hours in an inert atmosphere at 1000 °C, where the coating agent used in the surface coating is at least one of pitch, tar, or a resinous organic compound, and the mass ratio between the coating agent and the graphite material is (1 to 5): (99 to 95); subsequently, performing a surface etching reaction by one of the following methods: a high-temperature gas-phase reaction, a liquid-phase heating reaction, or a high-temperature solid-phase reaction. Gas sources used in the high-temperature gas-phase reaction include one of an oxygen-containing atmosphere, carbon dioxide, nitrogen dioxide, or methane. Reactants used in the liquid-phase heating reaction include one of $H_2O_2$, $(NH_4)_2S_2O_8$, concentrated sulfuric acid, or nitric acid. Reactants used in the high-temperature solid-phase reaction include one of potassium permanganate, ammonium bicarbonate, or sodium bicarbonate.

The preparation method in Embodiment 1 is: Weighing out 3 kg of artificial graphite material, mixing pitch as a coating agent with the artificial graphite evenly (the mass ratio between the pitch and the artificial graphite is 3: 97), and then carbonizing the mixture in a nitrogen atmosphere at 1000 °C for 4 hours to obtain a surface-pretreated product; making the surface-pretreated product into a slurry in which the solid content is 10%; adding $(NH_4)_2S_2O_8$ at a mass percentage of 1% (based on the mass of the surface-pretreated product), and then letting the mixture react at 80 °C for 6 hours; and finally, performing filtering, washing, and drying to obtain a carbon-based material, that is, a negative active material.

### Preparing a negative electrode

Mixing the negative electrode material, styrene-butadiene rubber (SBR for short) as a binder, and sodium carboxymethyl cellulose (CMC for short) as a thickener at a mass ratio of 97: 1.5: 1.5, and then adding an appropriate amount of deionized water solvent and stirring well to form a homogeneous negative electrode slurry. Applying the slurry onto a current collector copper foil already coated with a 1 $\mu$m-thick conductive coating layer, and performing oven-drying and cold-pressing to obtain a negative electrode plate.

### Preparing a positive electrode

Mixing lithium cobalt oxide (chemical formula: $LiCoO_2$) as a positive active material, acetylene black as a conductive agent, and polyvinylidene difluoride (PVDF for short) as a binder at a mass ratio of 96.3: 2.2: 1.5 in an appropriate amount of N-methyl-pyrrolidone (NMP for short) solvent, and stirring well to form a homogeneous positive electrode slurry. Coating a current collector aluminum foil with the slurry, and performing oven-drying and cold-pressing to obtain a positive electrode plate.

**Preparing an electrolyte solution**

Mixing ethylene carbonate (EC), propylene carbonate (PC), ethyl methyl carbonate (EMC), and diethyl carbonate (DEC) in a dry argon atmosphere glovebox at a mass ratio of EC: PC: EMC: DEC = 1: 3: 3: 3. Adding fluoroethylene carbonate and 1,3-propane sultone, dissolving and stirring the mixture well, and then adding a lithium salt $LiPF_6$, and mixing well to obtain an electrolyte solution. The mass percentage of the $LiPF_6$ is 12.5%, the mass percentage of the fluoroethylene carbonate is 2%, and the mass percentage of the 1,3-propane sultone is 2%, based on the mass of the electrolyte solution.

**Preparing a separator**

Using a 7 μm-thick polyethylene (PE) porous polymer film as a separator, with a porosity of 35%.

**Preparing a lithium-ion battery**

1) Preparing a lithium-ion coin cell

Cutting a negative electrode into discs of 14 mm in diameter, and using the disc as a working electrode; using a metallic lithium sheet of 18 mm in diameter as a reference electrode; placing a separator of 20 mm in diameter in between to separate the working electrode from the reference electrode; adding an appropriate amount of electrolyte solution; and assembling such components to obtain a CR2430 lithium-ion coin cell.

2) Preparing a pouch-type lithium-ion battery

Stacking the positive electrode, the separator, and the negative electrode sequentially in such a way that the separator is located between positive electrode and the negative electrode to serve a separation function, and then winding the stacked structure to obtain an electrode assembly. Welding tabs to the electrode assembly, and then putting the electrode assembly into an outer package made of an aluminum laminated film foil. Injecting the above-prepared electrolyte solution into the dried electrode assembly, and performing steps such as vacuum packaging, standing, chemical formation, shaping, and capacity test to obtain a pouch-type lithium-ion battery.

**Embodiments 2 to 11 and Comparative Embodiments 1 to 5**

**Preparing a negative electrode material**

The preparation process of the negative electrode material is similar to that in Embodiment 1, but differs in that the corresponding negative electrode material is prepared by adjusting the mass percentage of the added $(NH_4)_2S_2O_8$. Specific preparation parameters are shown in Table a:

**Table a**

| Embodiment/comparative embodiment | Mass percentage of $(NH_4)_2S_2O_8$ (%) | Reaction temperature (°C) | Reaction time (h) |
|---|---|---|---|
| Embodiment 1 | 1 | 80 | 6 |
| Embodiment 2 | 1.5 | 80 | 6 |
| Embodiment 3 | 2 | 80 | 6 |
| Embodiment 4 | 2.5 | 80 | 6 |
| Embodiment 5 | 3 | 80 | 6 |
| Embodiment 6 | 3.5 | 80 | 6 |
| Embodiment 7 | 4 | 80 | 6 |
| Embodiment 8 | 4.5 | 80 | 6 |
| Embodiment 9 | 5 | 80 | 6 |
| Embodiment 10 | 5.5 | 80 | 6 |
| Embodiment 11 | 6 | 80 | 6 |

(continued)

| Embodiment/comparative embodiment | Mass percentage of $(NH_4)_2S_2O_8$ (%) | Reaction temperature (°C) | Reaction time (h) |
|---|---|---|---|
| Comparative Embodiment 1 | / | / | / |
| Comparative Embodiment 2 | 0.5 | 80 | 6 |
| Comparative Embodiment 3 | 1 | 40 | 6 |
| Comparative Embodiment 4 | 7 | 80 | 6 |
| Comparative Embodiment 5 | 8 | 80 | 6 |

The preparation processes of the negative electrode, the coin cell, and the lithium-ion battery are the same as those in Embodiment 1.

### Embodiments 12 to 23

### Preparing a negative electrode material

The preparation process of the negative electrode material is similar to that in Embodiment 8, but differs in that the $C_{004}/C_{110}$ ratio of the negative electrode material is adjusted by adjusting the reaction time. Specific preparation parameters are shown in Table b:

**Table b**

| Embodiment | Mass percentage of $(NH_4)_2S_2O_8$ (%) | Reaction temperature (°C) | Reaction time (h) |
|---|---|---|---|
| Embodiment 8 | 4.5 | 80 | 6 |
| Embodiment 12 | 4.5 | 80 | 6.5 |
| Embodiment 13 | 4.5 | 80 | 7 |
| Embodiment 14 | 4.5 | 80 | 7.5 |
| Embodiment 15 | 4.5 | 80 | 8 |
| Embodiment 16 | 4.5 | 80 | 8.5 |
| Embodiment 17 | 4.5 | 80 | 9 |
| Embodiment 18 | 4.5 | 80 | 9.5 |
| Embodiment 19 | 4.5 | 80 | 10 |
| Embodiment 20 | 4.5 | 80 | 10.5 |
| Embodiment 21 | 4.5 | 80 | 11 |
| Embodiment 22 | 4.5 | 80 | 11.5 |
| Embodiment 23 | 4.5 | 80 | 12 |

### Embodiments 24 to 30

The preparation process of the negative electrode material is similar to that in Embodiment 21, but differs in that the $C_{004}/C_{110}$ ratio of the negative electrode material is adjusted by adjusting the reaction temperature. Specific preparation parameters are shown in Table c:

**Table c**

| Embodiment | Mass percentage of $(NH_4)_2S_2O_8$ (%) | Reaction temperature (°C) | Reaction time (h) |
|---|---|---|---|
| Embodiment 21 | 4.5 | 80 | 11 |
| Embodiment 24 | 4.5 | 90 | 11 |
| Embodiment 25 | 4.5 | 100 | 11 |

(continued)

| Embodiment | Mass percentage of $(NH_4)_2S_2O_8$ (%) | Reaction temperature (°C) | Reaction time (h) |
|---|---|---|---|
| Embodiment 26 | 4.5 | 110 | 11 |
| Embodiment 27 | 4.5 | 120 | 11 |
| Embodiment 28 | 4.5 | 130 | 11 |
| Embodiment 29 | 4.5 | 140 | 11 |
| Embodiment 30 | 4.5 | 150 | 11 |

The preparation processes of the negative electrode, the coin cell, and the lithium-ion battery are the same as those in Embodiment 21.

**Embodiments 31 to 36**

**Preparing a negative electrode material**

The preparation process of the negative electrode material is the same as that in Embodiment 27.

**Preparing a negative electrode**

The preparation process of the negative electrode is similar to that in Embodiment 27, but differs in that a graphitic negative electrode material and conventional artificial graphite are used as the negative active material, and the mass percentages of the graphitic negative electrode material in the negative active material in these embodiments are 95%, 90%, 85%, 80%, 75%, and 70%, respectively.

The preparation processes of the coin cell and the lithium-ion battery are the same as those in Embodiment 27.

**Test Methods**

1. $D_{v50}$ and $D_{v99}$ test

This application measures the particle size of the negative electrode material by using a Malvern particle size analyzer in the following process: Dispersing a specimen of the negative electrode material in a dispersant (ethanol), ultrasonicating the specimen for 30 minutes, and then adding the specimen into the Malvern particle size analyzer to start analyzing the particle size. $D_{v50}$ of the negative electrode material is a particle diameter value at which the cumulative volume of the specimen particles of the negative electrode material reaches 50% in a volume-based particle size distribution curve viewed from the small-diameter side. $D_{v99}$ of the negative electrode material is a particle diameter value at which the cumulative volume of the specimen particles of the negative electrode material reaches 99% in a volume-based particle size distribution curve viewed from the small-diameter side.

2. Testing average surface roughness of the negative electrode material

The surface roughness $R_1$, $R_2$,..., and $R_{100}$ of the negative electrode material is tested by using an atomic force microscope (AFM) in an area of 15 $\mu$m $\times$ 15 $\mu$m on the surface of the negative electrode material. The arithmetic average surface roughness $R_a$ is equal to $(R_1 + R_2 +...+ R_{100})/100$.

3. XRD test for the negative electrode material

Testing a (004) plane diffraction line pattern and a (110) plane diffraction line pattern in the X-ray diffractogram of the negative electrode material according to *Determination Method of Artificial Graphite Lattice Parameters,* JB/T 4220-2011, a machinery industry standard of the People's Republic of China. Test conditions are as follows: The source of the X-ray is CuK$\alpha$ radiation, and the CuK$\alpha$ radiation is removed by a filter or a monochromator. An operating voltage of a X-ray tube is 30 Kv to 35 Kv, and an operating current of the X-ray tube is 15 mA to 20 mA. The scanning speed of the counter is 1/4 (°)/min. In recording a diffraction line pattern of the 004 surface, a scanning range of a diffraction angle 2θ is 53° to 57°. In recording a diffraction line pattern of the 110 surface, a scanning range of a diffraction angle 2θ is 75° to 79°. A peak area obtained from the (004) plane diffraction line pattern is denoted as $C_{004}$. A peak area obtained from the (110) plane diffraction line pattern is denoted as $C_{110}$.

Testing the graphite as a negative active material by using an X-ray powder diffractometer under the following conditions: the target material is Cu K$\alpha$, the voltage/current is 40 KV/40 mA, the scanning angle range is 5° to 80°, the scanning step length is 0.00836°, and the time spent on each step length is 0.3 s. In the resulting X-ray diffraction pattern, 50% of the full width at a middle point between the lowest point and the highest point of the peak intensity of the 002 peak is the full-width-at-half-maximum, denoted as Fw. $L_a$ is an average size of the graphite microcrystals along the a-axis direction, and $L_a$ is equal to $K\lambda/\beta(2\theta)/\cos\beta$. K is a Scherrer's constant (given as K = 0.9). $\beta$ is the full-width-at-half-maximum of the 100 crystal plane diffraction peak. $\lambda$ is the wavelength (given as 0.154056). $\theta$ is the diffraction angle at which the maximum peak intensity of the 100 crystal plane diffraction peak occurs in the diffraction pattern. $L_c$ is an average stacking thickness of the graphite microcrystals along the c-axis direction, and $L_c$ is equal to $K\lambda/\alpha(2\theta)/\cos\alpha$. K is the Scherrer's constant (given as K = 0.9). $\alpha$ is the full-width-at-half-maximum of the 002 crystal plane diffraction peak. $\lambda$ is the wavelength (given as 0.154056). $\theta$ is the diffraction angle at which the maximum peak intensity occurs in the diffraction pattern.

4. Testing the tap density of the negative electrode material

The tap density means the mass per unit volume of the specimen powder in a container tapped under specified conditions, measured in units of $g/cm^3$.

A method for testing the tap density is: Fixing a graduated cylinder containing a specified mass of powder onto a mechanical vibration device, and letting the mechanical vibration device vibrate vertically up and down as driven by a vibration motor, so that the graduated cylinder containing the powder vibrates rhythmically along with the mechanical vibration device. With the increase in the number of vibrations, the powder in the graduated cylinder is gradually compacted. When the number of vibrations reaches the specified value, the mechanical vibration device stops vibrating, and the graduated cylinder shows a volume value. Density is defined as a mass divided by volume. Therefore, the density of the tapped powder is determined. Specific process parameters: number of vibrations: 5000; vibration frequency: 250 $\pm$ 15 vibrations/min; ambient temperature: 15 °C to 28 °C.

5. Testing the gravimetric capacity

Putting the coin cell onto a LAND tester to perform a test in the following process: Discharging the coin cell at a current of 0.05 C until the voltage reaches 5 mV, and leaving the coin cell to stand for 5 min, discharging the coin cell at a current of 0.05 mA until the voltage reaches 5 mV, discharging the coin cell at a current of 0.01 mA until the voltage reaches 5 mV, and then charging the coin cell at a current of 0.1 C until the voltage reaches 2.0 V, so as to obtain a charge capacity, and finally, dividing the charge capacity by the mass of the active material to obtain the gravimetric capacity of the negative electrode material, and dividing the charge capacity by the discharge capacity to obtain a first-cycle Coulombic efficiency.

6. Testing the irreversible lithium loss rate

Performing a fast-charge performance test on a coin cell in the following process:

1) Setting the test temperature to 25 °C.
2) Leaving the battery to stand for 10 min.
3) Discharging the battery at a current of 0.025 C until the voltage drops to 3.0 V.
4) Leaving the battery to stand for 10 min.
5) Charging the battery at a constant current of 3 C until the voltage reaches 4.48 V, and then charging the battery at a constant voltage until the current drops to 0.025 C.
6) Leaving the battery to stand for 10 min.
7) Discharging the battery at a current of 0.025 C until the voltage drops to 3.0 V.
8) Leaving the battery to stand for 10 min.
9) Repeating steps 5) to 8) for 10 cycles.

Denoting the discharge capacity of the battery at the end of the last cycle as $D_{10}$, denoting the charge capacity of the battery at the end of the first cycle as $C_1$, and calculating the irreversible lithium loss rate as $Q = (C_1 - D_{10})/C_1 \times 100\%$.

7. Testing a direct-current resistance (DCR) of a lithium-ion battery

1) Setting the test temperature to 25 °C.
2) Leaving the battery to stand for 60 min.

3) Charging the battery at a constant current of 0.5 C until the voltage reaches 4.48 V, and then charging the battery at a constant voltage until the current drops to 0.025 C.

4) Leaving the battery to stand for 10 min.

5) Discharging the battery at a direct current of 0.1 C until the voltage drops to 3 V.

6) Leaving the battery to stand for 10 min.

7) Charging the battery at a constant current of 0.5 C until the voltage reaches 4.48 V, and then charging the battery at a constant voltage until the current drops to 0.025 C.

8) Leaving the battery to stand for 1 h.

9) Discharging the battery at a direct current of 0.1 C for a period of 10 s.

10) Discharging the battery at a direct current of 1 C for a period of 1 s.

11) Leaving the battery to stand for 1 h.

12) Discharging the battery at a direct current of 0.5 C for a period of 6 min.

13) Skipping to step 15 if the voltage is less than or equal to 2.5 V.

14) Repeating steps 8 to 13 for 26 times.

15) Leaving the battery to stand for 10 min.

16) Charging the battery at a constant current of 0.5 C until the voltage reaches 3.95 V, and then charging the battery at a constant voltage until the current drops to 0.025 C.

17) Leaving the battery to stand for 10 min.

Measuring the DCR of the battery fading to 70% SOC, and the measured value is the test result.

**Test Results**

Table 1 shows how the average surface roughness $R_a$ of the negative electrode material affects the performance of the lithium-ion battery.

**Table 1**

| Serial No. | $R_a$ (nm) | $C_{004}/C_{110}$ | $L_c$ (nm) | $L_a$ (nm) | Fw (°) | Gravimetric capacity (mAh/g) | First-cycle Coulombic efficiency (%) | DCR (mΩ) | Lithium loss rate (%) |
|---|---|---|---|---|---|---|---|---|---|
| Embodiment 1 | 1.2 | 7.3 | 16.8 | 92.4 | 0.36 | 360.2 | 95.4 | 53.2 | 2.10 |
| Embodiment 2 | 2.5 | 7.1 | 17.5 | 94.3 | 0.34 | 360.6 | 95.1 | 52.6 | 2.03 |
| Embodiment 3 | 4.3 | 7 | 18.4 | 94.8 | 0.35 | 361.0 | 95.0 | 52.1 | 2.01 |
| Embodiment 4 | 6.6 | 6.7 | 18.9 | 95.3 | 0.33 | 360.8 | 95.2 | 50.9 | 1.97 |
| Embodiment 5 | 7.4 | 6.5 | 19.3 | 95.9 | 0.34 | 361.6 | 94.8 | 51.0 | 1.94 |
| Embodiment 6 | 8.3 | 6.6 | 19.7 | 96.3 | 0.35 | 362.4 | 94.7 | 51.1 | 1.91 |
| Embodiment 7 | 10.5 | 6.4 | 20.6 | 97 | 0.32 | 362.2 | 95.0 | 49.8 | 1.92 |
| Embodiment 8 | 12.6 | 6.2 | 21.8 | 97.5 | 0.33 | 361.0 | 94.9 | 49.7 | 1.90 |
| Embodiment 9 | 15.9 | 5.6 | 23.7 | 99.3 | 0.32 | 362.5 | 94.7 | 50.0 | 1.80 |
| Embodiment 10 | 17.2 | 4.9 | 24.8 | 101.5 | 0.31 | 363.0 | 94.6 | 49.6 | 1.84 |
| Embodiment 11 | 20.3 | 4.7 | 25.3 | 103.2 | 0.31 | 363.5 | 94.6 | 49.2 | 1.83 |

(continued)

| Serial No. | $R_a$ (nm) | $C_{004}/C_{110}$ | $L_c$ (nm) | $L_a$ (nm) | Fw (°) | Gravimetric capacity (mAh/g) | First-cycle Coulombic efficiency (%) | DCR (mΩ) | Lithium loss rate (%) |
|---|---|---|---|---|---|---|---|---|---|
| Comparative Embodiment 1 | 1.0 | 4.8 | 30.3 | 143.2 | 0.33 | 352.3 | 95.20 | 55 | 3.30 |
| Comparative Embodiment 2 | 1.1 | 5.2 | 31.2 | 140.3 | 0.34 | 355.3 | 95.10 | 54.4 | 3.26 |
| Comparative Embodiment 3 | 1.0 | 5.4 | 33.6 | 141.8 | 0.33 | 357.6 | 94.90 | 54.1 | 3.21 |
| Comparative Embodiment 4 | 32.3 | 2.3 | 33.2 | 148.7 | 0.26 | 364.1 | 91.20 | 47.9 | 2.80 |
| Comparative Embodiment 5 | 41.2 | 2.1 | 36.5 | 152.3 | 0.24 | 365.0 | 90.50 | 47.5 | 2.77 |

As can be seen from Table 1, when $R_a$ falls within the range of $1.2\,nm \leq R_a \leq 30\,nm$, the negative electrode material exhibits a relatively high gravimetric capacity, a relatively high first-cycle Coulombic efficiency, a relatively low DCR, and a relatively low lithium loss rate. When $R_a$ is 1.2 nm or below, the gravimetric capacity of the negative electrode material is relatively low, and the DCR and the lithium loss rate are relatively high. When $R_a$ is 30 nm or above, the first-cycle Coulombic efficiency of the negative electrode material is reduced, thereby adversely affecting the energy density and cycle performance of the lithium-ion battery.

On the basis of Embodiment 8, Table 2 further investigates how the performance of the lithium-ion battery is affected by the $C_{004}/C_{110}$ ratio, $L_c$, $L_a$, and the full-width-at-half-maximum of the 002 crystal plane diffraction peak, where the ratio is a ratio of the area of the 004 crystal plane diffraction peak to the area of the 110 crystal plane diffraction peak of the negative electrode material, $L_c$ is the average stacking thickness of the negative electrode material along the c-axis direction, and $L_a$ is the average stacking thickness of the negative electrode material along the a-axis direction.

**Table 2**

| Embodiment | $R_a$ (nm) | $C_{004}/C_{110}$ | $L_c$ (nm) | $L_a$ (nm) | Fw (°) | Gravimetric capacity (mAh/g) | Lithium loss rate (%) |
|---|---|---|---|---|---|---|---|
| Embodiment 8 | 12.6 | 6.2 | 21.8 | 97.5 | 0.33 | 361.0 | 1.90 |
| Embodiment 12 | 14.3 | 4.8 | 24.6 | 98 | 0.28 | 363.2 | 1.81 |
| Embodiment 13 | 16.7 | 4.6 | 27.5 | 102 | 0.29 | 363.8 | 1.85 |
| Embodiment 14 | 19.1 | 4.5 | 27.9 | 113 | 0.28 | 364.1 | 1.87 |
| Embodiment 15 | 20.6 | 4.2 | 28.1 | 115 | 0.30 | 364.2 | 1.92 |
| Embodiment 16 | 21.3 | 3.9 | 29.4 | 119 | 0.29 | 364.5 | 1.89 |
| Embodiment 17 | 21.9 | 3.6 | 29.7 | 123 | 0.28 | 364.9 | 1.93 |
| Embodiment 18 | 22.5 | 3.2 | 30 | 127 | 0.31 | 363.9 | 1.85 |
| Embodiment 19 | 23.3 | 3.0 | 30.6 | 130 | 0.30 | 365.2 | 1.82 |
| Embodiment 20 | 23.9 | 2.7 | 31.3 | 133 | 0.32 | 364.6 | 1.78 |
| Embodiment 21 | 24.5 | 2.4 | 31.6 | 137 | 0.31 | 363.8 | 1.75 |
| Embodiment 22 | 26.4 | 2.3 | 31.9 | 139 | 0.30 | 365.0 | 1.69 |
| Embodiment 23 | 28.8 | 2.0 | 32 | 145 | 0.32 | 364.7 | 1.70 |

As can be seen from Table 2, the $C_{004}/C_{110}$ ratio represents the orientation index of the crystal plane of the negative electrode material. The lower the value of this ratio, the more isotropic the negative electrode material, thereby facilitating intercalation of lithium ions from a plurality of directions, and improving the kinetic properties. However, an unduly low value of the $C_{004}/C_{110}$ ratio will increase the risk of deformation of the electrode plate during cycling. The $C_{004}/C_{110}$ ratio falling within 2 to 5 is appropriate. In addition, the gravimetric capacity of the negative electrode material is higher when $L_c$ satisfies $23.0 \, nm \leq L_c \leq 32.0 \, nm$, $L_a$ satisfies $98.0 \, nm \leq L_a \leq 145 \, nm$, and Fw satisfies $0.280° \leq Fw \leq 0.320°$.

On the basis of Embodiment 21, Table 3 further investigates how the values of $D_{v50}$ and $D_{v99}$ of the negative electrode material affect the performance of the lithium-ion battery.

**Table 3**

| Embodiment | $D_{v50}$ (nm) | $D_{v99}$ (nm) | TD (g/cm³) | $R_a$ (nm) | Gravimetric capacity (mAh/g) | First-cycle Coulombic efficiency (%) |
|---|---|---|---|---|---|---|
| Embodiment 21 | 8 | 20 | 1.02 | 24.5 | 363.8 | 94.5 |
| Embodiment 24 | 7.5 | 18 | 1.01 | 26.3 | 363.0 | 94.2 |
| Embodiment 25 | 7.1 | 18 | 1.0 | 27.0 | 362.3 | 93.7 |
| Embodiment 26 | 6.8 | 17 | 0.99 | 28.6 | 361.8 | 93.4 |
| Embodiment 27 | 10.9 | 28 | 0.95 | 12.6 | 361.3 | 94.7 |
| Embodiment 28 | 11.6 | 32 | 0.92 | 7.5 | 360.4 | 94.8 |
| Embodiment 29 | 12.7 | 33 | 0.85 | 3.4 | 360.6 | 94.7 |
| Embodiment 30 | 13 | 35 | 0.80 | 1.5 | 360.1 | 94.9 |

As can be seen from Embodiment 21 and Embodiments 24 to 26 in Table 3, with the decrease of $D_{v50}$ and $D_{v99}$, the first-cycle Coulombic efficiency of the negative electrode material shows a decreasing trend. A speculative cause is that the contact area of the negative electrode material during reaction increases, the reaction of the carbon atoms intensifies, and the surface roughness increases, thereby intensifying the side reactions between the material and the electrolyte solution, and in turn, reducing the first-cycle Coulombic efficiency. As can be seen from Embodiment 21 and Embodiments 27 to 30, with the increase of the $D_{v50}$ and $D_{v99}$, the average surface roughness $R_a$ of the negative electrode material decreases gradually, and the gravimetric capacity shows a decreasing trend. A speculative cause is that, when the particles are enlarged, it is more difficult for the negative electrode material to react during treatment, the surface roughness is lower, and the adsorption sites of lithium ions are reduced, thereby impairing the effect on improving the gravimetric capacity. At the same time, overlarge particles may make the negative electrode slurry less processible, thereby resulting in particle scratches in a process of coating a relatively thin electrode plate, and deteriorating the performance. The tap density (TD) characterizes the difficulty of processing the material during slurry preparation. When the reaction intensifies, the number of groups increases on the surface of the material, thereby facilitating uniform dispersion in the slurry. In summary, it is appropriate to define that $D_{v50}$ is 8 nm to 13 nm, $D_{v99}$ is 20 nm to 35 nm, and TD is greater than or equal to 0.80 g/ cm³.

On the basis of Embodiment 27, Table 4 further investigates how the mass percentage w of the graphitic negative electrode material in the negative active material affects the performance of the lithium-ion battery.

**Table 4**

| Embodiment | W (%) | Gravimetric capacity (mAh/g) | Expansion rate of negative electrode (%) | DCR (mΩ) | Lithium loss rate (%) |
|---|---|---|---|---|---|
| Embodiment 27 | 100 | 361.3 | 22.6 | 47.8 | 1.78 |
| Embodiment 31 | 95 | 360.6 | 23.1 | 49.2 | 1.83 |
| Embodiment 32 | 90 | 360.1 | 23.8 | 51.0 | 1.85 |
| Embodiment 33 | 85 | 359.7 | 24.6 | 50.4 | 1.89 |
| Embodiment 34 | 80 | 359.4 | 25.0 | 52.0 | 2.01 |
| Embodiment 35 | 75 | 356.3 | 26.1 | 53.4 | 2.35 |
| Embodiment 36 | 70 | 356.0 | 26.7 | 54.3 | 2.76 |

As can be seen from Table 4, when $R_a$ of the graphite falls within the range of 1.2 nm $\leq R_a \leq$ 30 nm and the mass percentage w of the graphite is 80% or above, the negative electrode plate achieves a higher gravimetric capacity, a lower expansion rate of the negative electrode, a lower DCR, and a lower lithium loss rate. A speculative cause is that the graphitic negative electrode material with the $R_a$ falling within the range of 1.2 nm $\leq R_a \leq$ 30 nm achieves a higher gravimetric capacity than the conventional graphite. In addition, the $C_{004}/C_{110}$ ratio of the graphitic negative electrode material is lower than that of the conventional graphite, thereby making the lithiated electrode plate expand in a plurality of directions, and in turn, alleviating the expansion rate of the negative electrode. Moreover, this is more conducive to intercalating lithium ions from a plurality of directions, thereby improving the kinetic properties. Therefore, the mass percentage w of the graphite with the $R_a$ falling within the range of 1.2 nm $\leq R_a \leq$ 30 nm is defined to be 80% or above to make greater improvement.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

**Claims**

1. A negative electrode material, containing a carbon-based material, wherein an average surface roughness of the negative electrode material is $R_a$, and 1.2 nm $\leq R_a \leq$ 30 nm.

2. The negative electrode material according to claim 1, wherein 5 nm $\leq R_a \leq$ 25 nm.

3. The negative electrode material according to claim 1, wherein the negative electrode material satisfies at least one of the following conditions (i) to (v):

   (i) as tested by X-ray diffractometry, a ratio of a peak area $C_{004}$ of a 004 crystal plane diffraction peak to a peak area $C_{110}$ of a 110 crystal plane diffraction peak of the negative electrode material satisfies: $2 \leq C_{004}/C_{110} \leq 7$;
   (ii) as tested by X-ray diffractometry, an average stacking thickness of the negative electrode material along a c-axis direction is $L_c$, 20 nm $\leq L_c \leq$ 35 nm, an average stacking thickness of the negative electrode material along an a-axis direction is $L_a$, and 95 nm $\leq L_a \leq$ 150 nm;
   (iii) as tested by X-ray diffractometry, a full-width-at-half-maximum of a 002 crystal plane diffraction peak of the negative electrode material is Fw, and $0.28° \leq$ Fw $\leq 0.35°$;
   (iv) $D_{v50}$ of the negative electrode material satisfies: 6 nm $\leq D_{v50} \leq$ 15 nm, and $D_{v99}$ of the negative electrode material satisfies: 15 nm $\leq D_{v99} \leq$ 42 nm; or
   (v) a tap density of the negative electrode material is greater than or equal to 0.80 g/cm$^3$.

4. The negative electrode material according to claim 3, wherein the negative electrode material satisfies at least one of the following conditions (vi) to (x):

   (vi)

   $$2 \leq C_{004}/C_{110} \leq 5;$$

   (vii)

   $$23 \text{ nm} \leq L_c \leq 32 \text{ nm}, 98 \text{ nm} \leq L_a \leq 145 \text{ nm};$$

   (viii)

   $$0.28° \leq Fw \leq 0.32°;$$

   (ix)

   $$8 \text{ nm} \leq D_{v50} \leq 13 \text{ nm}, 20 \text{ nm} \leq D_{v99} \leq 35 \text{ nm};$$

   or

(x) the tap density of the negative electrode material is 0.80 g/cm$^3$ to 1.5 g/cm$^3$.

5. The negative electrode material according to claim 1, wherein the carbon-based material comprises natural graphite and/or artificial graphite.

6. The negative electrode material according to claim 1, wherein a method for preparing the negative electrode material comprises: heating and reacting a pretreated graphite material with $(NH_4)_2S_2O_8$ under a liquid-phase condition, wherein a mass percentage of the added $(NH_4)_2S_2O_8$ is 1% to 6%.

7. A secondary battery, comprising a negative electrode; the negative electrode comprising a negative active material layer; wherein the negative active material layer comprises a negative active material, and the negative active material comprises the negative electrode material according to any one of claims 1 to 6.

8. The secondary battery according to claim 7, wherein, based on a mass of the negative active material, a mass percentage of the negative electrode material is w, and 70% ≤ w ≤ 100%.

9. The secondary battery according to claim 7, wherein the negative electrode satisfies at least one of the following conditions (xi) to (xiii):

(xi) an expansion rate of the negative electrode is less than or equal to 30%;
(xii) a compacted density of the negative electrode is greater than or equal to 1.48 g/cm$^3$; or
(xiii) a film resistivity of the negative electrode is less than or equal to 0.50 $\Omega$/cm.

10. An electronic device, comprising the secondary battery according to any one of claims 7 to 9.

FIG. 1

FIG. 2

## Coin Cell

FIG. 3

## 3 C charge

FIG. 4

FIG. 5

## INTERNATIONAL SEARCH REPORT

| | International application No. |
| --- | --- |
| | **PCT/CN2022/123062** |

**A.    CLASSIFICATION OF SUBJECT MATTER**

H01M4/583(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 负极, 碳, 氮气, 吸附, 孔径, 体积, negative w electrode, carbon, nitrogen, adsorp+, pore w size, volume

**C.    DOCUMENTS CONSIDERED TO BE RELEVANT**

| Category* | Citation of document, with indication, where appropriate, of the relevant passages | Relevant to claim No. |
| --- | --- | --- |
| X | JP H08171914 A (TORAY INDUSTRIES, INC.) 02 July 1996 (1996-07-02) description, paragraphs [0005]-[0036] | 1-2, 5, 7-10 |
| Y | JP H08171914 A (TORAY INDUSTRIES, INC.) 02 July 1996 (1996-07-02) description, paragraphs [0005]-[0036] | 3, 4 |
| Y | CN 115020703 A (NINGDE AMPEREX TECHNOLOGY LTD.) 06 September 2022 (2022-09-06) description, paragraphs 25-52 | 3, 4 |
| Y | CN 113795947 A (NINGDE AMPEREX TECHNOLOGY LTD.) 14 December 2021 (2021-12-14) description, paragraphs 3-48 | 3, 4 |
| A | CN 115101803 A (JIANGSU ZENERGY BATTERY TECHNOLOGIES CO., LTD.) 23 September 2022 (2022-09-23) entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 May 2023** | **24 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2022/123062**

| Patent document cited in search report | | | Publication date (day/month/year) | Patent family member(s) | | | Publication date (day/month/year) |
|---|---|---|---|---|---|---|---|
| JP | H08171914 | A | 02 July 1996 | None | | | |
| CN | 115020703 | A | 06 September 2022 | None | | | |
| CN | 113795947 | A | 14 December 2021 | WO | 2022160332 | A1 | 04 August 2022 |
| CN | 115101803 | A | 23 September 2022 | None | | | |

Form PCT/ISA/210 (patent family annex) (July 2022)